(19) Europäisches Patentamt
European Patent Office
Office européen des brevets

(11) Publication number: 0 277 515 B1

# (12) EUROPEAN PATENT SPECIFICATION

(45) Date of publication of patent specification: **16.09.92** (51) Int. Cl.[5]: **G02B 6/44**

(21) Application number: **88100469.1**

(22) Date of filing: **14.01.88**

## (54) Optical Fiber cable.

(30) Priority: **16.01.87 JP 7668/87**
**16.01.87 JP 7669/87**
**21.09.87 JP 236814/87**
**21.09.87 JP 236815/87**

(43) Date of publication of application:
**10.08.88 Bulletin 88/32**

(45) Publication of the grant of the patent:
**16.09.92 Bulletin 92/38**

(84) Designated Contracting States:
**DE FR GB IT**

(56) References cited:
**DE-A- 2 709 106**
**FR-A- 2 564 987**
**GB-A- 2 022 644**
**GB-A- 2 151 391**

**PATENT ABSTRACTS OF JAPAN, vol. 10, no. 26 (P-425)[2083]I, 31st January 1986; & JP-A-60 177 311 (DAINICHI NIPPON DENSEN K.K.) 11-09-1985**

(73) Proprietor: **SUMITOMO ELECTRIC INDUSTRIES LIMITED**
**No. 15, Kitahama 5-chome, Higashi-ku**
**Osaka-shi, Osaka 541(JP)**

(72) Inventor: **Lin, Bang c/o Yokohama Works**
**Sumitomo Electric Industries, Ltd. No. 1, Taya-cho**
**Sakae-ku Yokohama-shi Kanagawa(JP)**
Inventor: **Kitayama, Yoshinobu c/o Yokohama Works**
**Sumitomo Electric Industries, Ltd. No. 1, Taya-cho**
**Sakae-ku Yokohama-shi Kanagawa(JP)**

(74) Representative: **Patentanwälte Grünecker, Kinkeldey, Stockmair & Partner**
**Maximilianstrasse 58**
**W-8000 München 22(DE)**

EP 0 277 515 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an optical fibre cable. More particularly, it relates to an improved optical fibre cable that has at least one optical fibre wound helically around a central member in periodically reversing directions. A similar type of optical fibre cable is known, for example, from prior art DE-A-2709106.

Optical fibre cables have conventionally been fabricated by accommodating unidirectionally stranded optical fibres in helical grooves in a spacer. With a view to improving the efficiency and reliability of optical cable operations, it has been proposed in Unexamined Published Japanese Patent Application No. 126238/1977 that optical fibres be accommodated in helical grooves in a spacer that are reversed in the direction of helix at given intervals. This method is effective in improving the efficiency and reliability of optical cable operations. However, it has raised new problems that did not occur in the optical fibre cables of the single lay-direction design. The problems are an increased transmission loss due to the bending of an optical cable, and the dependency of the loss on the direction in which the cable is bent. It has been demonstrated both theoretically and empirically that when a cable having optical fibres accommodated in helical grooves in a spacer (outer diameter 9 mm) that are reversed in the direction of helix at every 360° point is bent at a radius of 100 mm, no less than 1% strain occurs in the fibres. The proof strength level conventionally used as a criterion for screening fabricated fibres in proof testing is 0.7%, and the 1% strain is not tolerable because of the light transmission loss and the shortening of the optical fiber's life.

Another conventional approach for fabricating optical cables is to wind a plurality of optical fibers that are stranded such that they follow helical paths in one direction around a central member. To improve the operational efficiency and reliability of cabling by this method, it has been proposed in Japanese Utility Model Publication No. 39362/1980 that optical fibers be stranded along the outer surface of a common central member, with the direction of lay being periodically reversed at appropriate intervals in the longitudinal direction. This method is effective in improving the efficiency and reliability of cabling operations but it suffers from the same disadvantages as the method disclosed in Unexamined Published Japanese Patent Application No. 126238/1977 regarding light transmission loss and shortening of the optical fiber's life.

For example, it has been shown both theoretically and empirically that when a cable constructed by winding optical fibers helically around a central member having an outside diameter of 9 mm, with the direction of lay being reversed at intervals of 200 mm and at every 360° point, is bent at a radius of 100 mm, as much as 1% stain develops in the fibers.

It is unclear why the optical fiber cables shown in the two prior patents cited above have poor bending characteristics. No thorough design considerations have yet been made about the lay reversing angle that ensures the development of minimum strain irrespective of the direction in which the cable is bent. The term "lay reversing angle" means the angle through which an optical fibre is rotated in the circumferential direction of the central member over the distance from one reversal point of the direction helix to the next reversal point. The definition of this term is graphically shown in FIGURE 2. When the reversing of the direction of lay starts at point F1 on a central member 1 and ends at point F2 where the direction of lay is reversed once again, the angle through which the optical fibre is rotated in the circumferential direction of the central member 1 is designated as the "lay reversing angle" of the fibre.

## SUMMARY OF THE INVENTION

An object, therefore, of the present invention is to provide an optical fibre cable that is free from the problems associated with the conventional designs and which features an optimum lay reversing angle.

The present invention achieves its object by an optical fibre cable having at least one optical fibre wound helically around an elongated central member in periodically reversing directions, whereby the lay reversing angle $\phi$, which signifies the angle through which a helical groove in the spacer is rotated in the circumferential direction of said spacer over the distance from one reversal point of the direction of helix to the next one, is set at a value in the neighbourhood of 275° + 360° x n, where n is zero or a positive integer.

According to a particular embodiment of the present invention, the lay reversing angle $\phi$ is set at a value between 240° and 310°.

In a preferred embodiment, the lay reversing angle $\phi$ is such that 360° x n (n is a positive integer) may be added to the above specified value between 240° and 310°. In another embodiment, the lay reversing angle $\phi$ is set at approximately 275° or 275° 360° x n (n is a positive integer).

## BRIEF DESCRIPTION OF THE DRAWINGS

FIGURE 1 (a) is a cross section of an optical fibre cable using a grooved spacer according to the first aspect of the present invention;
FIGURE 1 (b) is a cross section of a layer-stranded optical fibre cable according to the second aspect of the present invention;
FIGURE 2 is a diagram showing the definition of the lay reversing angle;
FIGURE 3 is a sketch showing diagrammatically an optical fibre cable with the direction of lay being periodically reversed at given intervals;
FIGURE 4 is a two-dimensional representation of the optical fiber cable shown in FIGURE 3;
FIGURE 5 is a graph showing the theoretical relationship between the lay reversing angle and the bending stain in an optical fiber;
FIGURE 6 is a diagram showing the definition of the cable bending direction;
FIGURE 7 is a graph showing the empirical relationship between the lay reversing angle and the bending stain in an optical fiber; and
FIGURE 8 is a diagram depicting a bending strain.

## DETAILED DESCRIPTION OF THE INVENTION

The present invention is described hereinafter with particular reference being made to an optical fiber cable of the type employing a grooved spacer as shown in FIGURE 1(a). It should, however, be noted that the following description is also valid for the layer-stranded optical cable shown in FIGURE 1(b). FIGURE 3 is a sketch showing diagrammatically an optical fiber cable with the direction of lay being periodically reversed at given intervals. In FIGURE 3, the numeral 3 signifies a central member equivalent to the grooved spacer, and 4 is an optical fiber accommodated in a helical groove with the direction of lay being periodically reversed at given intervals. FIGURE 4 is a two-dimensional representation of the optical fiber cable shown in FIGURE 3, with point A being referenced as the center. The models in FIGURES 3 and 4 assume that optical fibers 4 and 2, respectively, are tightly confined in the grooves. Each of reference numerals 4, 7 and 16 in the drawings may denote a single fiber or plural fibers which may be loose fibers or a bundled or stranded fiber unit. In the following theoretical description, however, it is assumed that reference numeral 4 denotes a single fiber, for simplicity.

If the central nember 3 shown in the coodinate system of FIGURE 3 is bent in the x-z plane with the center of bending situated in the positive direction of x-axis, a compressive strain occurs in portions B-A and A-D of the optical fiber unit 2 shown in FIGURE 4 while a tensile strain develops in portions C-B and D-C of the same optical fiber unit. If the lay reversing angle $\phi$ shown in FIGURE 2 is 180° and less, a compressive strain develops in the entire portion of the optical fiber unit. In order to avoid this problem, an optical cable of the type shown in FIGURE 1(a) is usually designed in such a way that the lay reversing angle $\phi$ is not less than 180°.

The present inventors made theoretical considerations for the case of a lay reversing angle of 360° which is commonly employed with an optical fiber cable of the type shown in FIGURE 1. The details of these theoretical considerations are fully set out below. As a result, it was found that even when optical fibers had a freedom of movement with the cable being bent in the same direction as mentioned above with reference to FIGURE 3, the net strain occurring in the optical fibers, that is, the difference between tensile strain and compressive strain, would remain to a substantial degree and therefore could not be neglected. This was assumed by the present inventors to be the cause of the poor bending properties of the conventional optical fiber cable shown in FIGURE 1(a) which employs a guided spacer.

The theoretical considerations by the present inventors started with determination of a lay reversing angle that would produce equal amounts of tensile and compressive strains in optical fibers when an optical fiber cable of the type shown in FIGURE 1(a) was bent. With reference to the model shown in FIGURE 3, the geometry of an optical fiber section defined by points F1 and F2 can be expressed by the following set of equations (1):

$$x = a \cos \theta$$
$$y = a \sin \theta \qquad \ldots\ldots (1)$$
$$z = \frac{P}{2} + \frac{P}{2\pi} \sin^{-1} \frac{2\theta}{\phi}$$

where a is the distance between origin O and point A; $\theta$ is the angle the x-axis forms with the radius vector in the x-y plane; $\phi$ is the lay reversing angle; and P is the pitch of the helical path followed by an optical fiber. The length of the line, $L_O$, defined by points F1 and F2 on the optical fiber, can be determined from the set of equations (1).

If the central member 3 in a model of an optical cable is bent at a radius R in a direction that produces an angle of $\alpha$ with the x-axis, the following set of equations (2) can be derived from the set of equations (1), with the details of the mathematical calculations being omitted:

$$x_R = R_{\cos\alpha} - [R - \alpha \cos(\phi - x)] \cos\alpha \cos\left(\frac{P}{2R} + \frac{P}{2\pi R} \sin^{-1} \frac{2\theta}{\phi}\right) - a \sin(\phi - x) \sin\alpha$$

$$y_R = R \sin\alpha - [R - a \cos(\theta - \alpha)] \sin\alpha \cos\left(\frac{P}{2R} + \frac{P}{2\pi R} \sin^{-1} \frac{2\theta}{\phi}\right) + a \sin(\theta - \alpha) \cos\alpha$$

$$z_R = [R - a \cos(\theta - \alpha)] \sin\left(\frac{P}{2R} + \frac{P}{2\pi R} \sin^{-1} \frac{2\theta}{\phi}\right) \qquad \ldots (2).$$

The length of the line, LR, defined by points F1 and F2 on the optical fiber 4 when the central member is bent at a radius R in a direction that produces an angle of $\alpha$ with the x-axis, can be determined from the set of equations (2).

The strain $\epsilon$ (%) that develops between points F1 and F2 on the optical fiber 4 can be calculated from the following equation (3):

$$\epsilon = \frac{L_R - L_O}{L_O} \times 100\ (\%) \qquad \ldots (3).$$

As is clear from FIGURE 3, $\epsilon$ denotes the strain that occurs in the section of the optical fiber 4 covering P/2, or half the pitch of the helix it forms. Obviously, the lay reversing angle is most desirably set at a value that makes this strain zero.

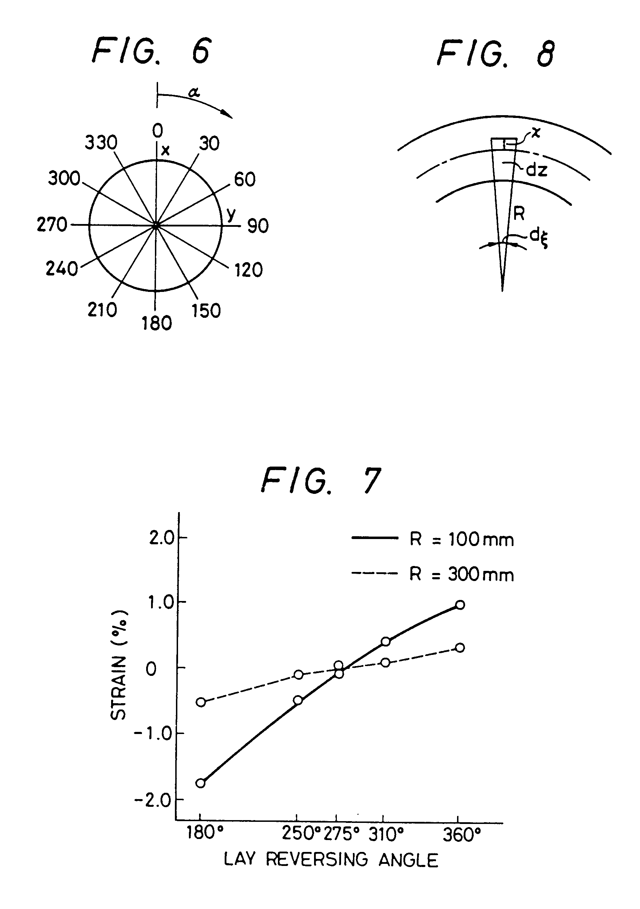

The results of theoretical calculations made to determine the relationship between $\epsilon$ in equation (3) and the lay reversing angle for P = 400 mm and a = 4 mm when the cable was bent at radii (R) of 100 mm and 300 mm are depicted in FIGURE 5. The results for R = 100 mm are shown by the solid lines and the results for R = 300 mm by the dashed lines. The y-axis represents the lay reversing angle $\phi$ defined in FIGURE 2. The numerals over bars at both ends of each strain curve denote angles that are referenced to the diagram shown in FIGURE 6 for defining the cable bending direction.

The results shown in FIGURE 5 indicate that if the lay reversing angle is in the neighborhood of 275°, the net strain occurring in an optical fiber is reduced to zero no matter which direction and at what radius

the fiber is bent under the conditions specified above. Since the optical cable under discussion is of such a structure that optical fibers are stranded and confined in helical grooves in a cylindrical spacer with the direction of lay being periodically reversed, it is also clear that the same results are attained if 360° is added to 275° which is the preferred value of the lay reversing angle determined by the calculations outlined above.

In order to demonstrate the applicability of the theoretical considerations described above, samples of optical cable were fabricated and tested by the following procedures. Five spacers with an outside diameter of 9 mm were provided; they each had helical grooves that were periodically reversed in the direction of lay at pitches of 400 mm. The lay reversing angles of the five spacers were 180°, 250°, 275°, 310° and 360°. Bare optical fibers were tightly confined in the helical groove in each spacer and fixed at both ends to the spacer. The strain that developed in the optical fibers in each sample when it was bent in the direction that would produce the greatest strain according to FIGURE 5 was measured by the phase shift method, in which light was launched into the optical fiber at one end and any fiber elongation that occurred was measured by detecting the change in the phase of light received at the other end. The results are shown in FIGURE 7 by a solid line for R = 100 mm and by a dashed line for R = 300 mm. The experimental results shown in FIGURE 7 are in substantial agreement with those obtained by theoretical calculations and which are shown in FIGURE 5.

Optical fiber cables are typically designed in such a way that bending at radii 20 - 30 times the diameter of the cable is tolerated for long-term service, and bending at radii about 10 times the cable diameter for short-term service. Therefore, from the viewpoint of transmission loss and fiber life, it is required that the fibers experience a strain not exceeding 0.2% of the ordinary proof strength level for long-term service, and not exceeding 0.7% for short-term service.

The optical cable used as a model for theoretical calculations is assumed to have an outside diameter of 10 mm, so the bending radius R is 300 mm if it is 30 times the cable diameter and 100 mm if it is 10 times the cable diameter. The results of theoretical calculations shown in FIGURE 5 and the experimental results shown in FIGURE 7 clearly indicate that in order for an optical fiber to satisfy the above-specified permissible ranges of net strain (≦ 0.2% for long-term service and ≦ 0.7% for short-term service), the lay reversing angle should advantageously be within the range of 240° - 310°. It has also been found that since an allowance of approximately 0.1% is ordinarily provided for the length of optical fibers when they are assembled and confined in helical grooves in a spacer, the strain that might occur in the fibers can be limited within the permissible range even if the lay reversing angle is within a broader range of 230° - 330°. As already pointed out in connection with the explanation of the theoretical results shown in FIGURE 5, substantially the same results are attained with an optical fiber cable of the type illustrated in FIGURE 1-(a) even if integral multiples of 360° are added to the above-specified optimum range of lay reversing angle so that it is expanded to the range of from 230° + 360° x n to 330° + 360° x n (n is zero or a positive integer).

For various outside diameters of the optical cable, the above-described results can be equally applied by properly selecting the pitch of helices of optical fibers.

In order to verify the results described above, the present inventors performed the following mathematical operations.

Referring to FIGURE 3 which shows diagrammatically an optical cable with the direction of lay being periodically reversed at given intervals, if the cable is bent in the x-z plane, one may safely consider that the three-dimensional spatial curve expressed by the set of equations (1) will develop a strain due to its z-component. As is clear from FIGURE 8, which is a diagram showing a bending strain, if a small segment of a line dz at a certain point in the optical fiber in the z direction is bent at a radius R, the length of that segment will increase to (R + x)d $\epsilon$. Since the length of the center line remains unchanged, the following relationship is valid

$$R d\epsilon = dz \qquad (4).$$

Therefore, the following relationship is derived:

$$(R + x)d\varepsilon = dz + \frac{xdz}{R} \qquad \ldots (5).$$

From equation (5), dΔ1z, or the elongation (contraction if x takes on a negative value) of dz resulting

from bending at a radius of R, is given by:

$d\Delta 1z = \frac{1}{R} xdz$ (6).

For the sake of convenience of further calculations, let us transform variable $\theta$ in the set of equations (1) to variable t, expressed by the following function:

$t = \sin^{-1} \frac{2\theta}{\phi}$ (7).

Substituting equation (7) in equation (1), which in turn is substituted in equation (6), the total elongation occurring between points F1 and F2 shown in FIGURE 3 can be expressed by:

$$\Delta 1z = \frac{1}{R} \int_{-\frac{\pi}{2}}^{\frac{\pi}{2}} x \, dz = \frac{Pa}{2\pi R} \int_{-\frac{\pi}{2}}^{\frac{\pi}{2}} \cos\left(\frac{\phi}{2} \sin t\right) dt$$

$$= \frac{Pa}{\pi a} \int_{0}^{\frac{\pi}{2}} \cos\left(\frac{\phi}{2} \sin t\right) dt \quad \ldots (8).$$

Obviously, an optimum value of the lay reversing angle $\phi$ is such that the integrated value of equation (8) becomes zero.

If the optical cable is bent at a radius R in a direction that will produce an angle of $\alpha$ with the x-axis (see FIGURE 6), the total elongation occurring between points F1 and F2 shown in FIGURE 3 can be expressed by the following (details of the calculations are omitted):

$$\Delta 1 = \frac{Pa}{\pi R} \cos \alpha \int_{0}^{\frac{\pi}{2}} \cos\left(\frac{\phi}{2} \sin t\right) dt \quad \ldots (9).$$

This equation is equivalent to equation (8) for the case of $\alpha = 0$, namely, when the cable is bent in the x-z plane.

Integrating

$$\int_{0}^{\frac{\pi}{2}} \cos\left(\frac{\phi}{2} \sin t\right) dt,$$

the result is:

$\frac{\pi}{2} J_O (\frac{\phi}{2})$ (10)

where $J_O (\frac{\phi}{2})$is a Bessel function of order zero. Determining the null point of the first order for $J_O (\frac{\phi}{2})$,

$\frac{\phi}{2} = 2.4$ (11)

an angular representation of $\phi$ is $\phi = 275°$. Null points for the second and higher orders are situated in the neighborhood of approximately 275° plus integral multiples of 360°.

The foregoing discussion provides a theoretical verification of the fact that below 360°, a lay reversing angle of 275° ensures optimum results irrespective of the pitch P of the helices of an optical fiber and the bending radius R.

A specific embodiment of the optical fiber cable of the present invention is hereinafter described with reference to each of the two aspects of the invention.

A sample of optical cable was fabricated incorporating the first aspect of the present invention. As

shown schematically in FIGURE 1(a), this cable had optical fibers accommodated in helical grooves in a spacer, with the direction of lay being periodically reversed at given intervals. The spacer indicated at 6 was provided with four helical grooves having a lay reversing angle $\phi$ of 280° a helix pitch P of 400 mm, and an outside diameter of 9 mm. An optical fiber unit 7 was accommodated in each of the four cavities formed by plastic holding tape 8 wrapped around the spacer. The plastic tape 8 was in turn covered with a PE LAP sheath 5. The cable structure had a tension member 9 in its center.

When this optical cable was bent at a radius of 100 mm, no more than 0.2% strain developed in the optical fibers. When the bending radius was 300 mm, the strain occurring in the fibers was reduced to 0.1% and less.

The foregoing description concerns the case where n is zero, but it should be understood that the present invention is by no means limited to this particular case only. Even if n is not zero, the advantages of the present invention are equally attained so long as n is a positive integer. In order to provide a maximum length for the end preparation of an optical cable for branching, it is common practice to employ a grooved spacer in which, following several rotations in the S direction, the direction of lay of individual optical fibers is reversed to start several rotations in the Z direction. As an example of this cable design, a sample employing a grooved spacer of n = 10 was fabricated (the structure of this cable is not shown). The spacer was provided with four helical grooves having an outside diameter of 9 mm; the grooves had such a geometry that the fibers would make 10 rotations in the S direction at pitches of 200 mm, the direction of lay then being reversed at an angle of 275°, followed by 10 rotations of the fibers in the Z direction. Three bare optical fibers were accommodated in each of the four cavities formed by plastic holding tape wrapped around the spacer. The plastic tape was in turn covered with a PE LAP sheath to form a cable. When the cable was bent at a radius of 100 mm about the lay reversal point, no more than 0.15% strain developed in the optical fibers. When the same bending test was conducted on an optical cable having a lay reversing angle of 360°, approximately 0.25% strain developed in the optical fibers.

A sample of optical fiber cable was fabricated incorporating the second aspect of the present invention. As shown schematically in FIGURE 1(b), the cable had optical fibers stranded to follow a helical path on the outer surface of a central member, with the direction of lay being periodically reversed at given intervals. Optical fiber units designated 16 were stranded around a central member 17 (outer diameter, 9 m) and assembled, with the direction of lay being reversed at intervals of 200 mm and at every 280° point. The assembled optical fiber units was covered with plastic holding tape (not shown), then with a PE LAP sheath 15 to form a cable.

When this optical cable was bent at a radius of 100 mm, no more than 0.2% strain developed in the optical fiber units. When the bending radius was 300 mm, the strain occurring in the fiber units was reduced to 0.1% and less.

The exact value of n to be employed in the first and second aspects of the present invention will vary depending upon the intended use of the cable, its outside diameter, the number of optical fiber units and the size of assembling equipment. It should be noted, however, that the essence of the present invention is independent of the value of n and concerns determination of an optimum lay reversing angle for any point where the direction of lay of individual fibers is reversed.

As described on the foregoing pages, the optical fiber cable according to the first aspect of the present invention has optical fibers accommodated in helical grooves in a spacer that is periodically reversed in the direction of helix and is characterized in that an optimum lay reversing angle $\phi$ is adjusted to satisfy the following condition:

$$230° + 360° \times n \leqq \phi \leqq 330° + 360° \times n$$

where n is zero or a positive integer. The optical fiber cable incorporating this feature has the advantage of significantly reduced cabling costs as compared with the conventional optical cable fabricated by accommodating unidirectionally stranded optical fibers in helical grooves in a spacer. In addition, this cable is free from the dependence of increased transmission loss on the direction in which the cable is bent; this has been a problem encountered in the conventional type of the optical cable contemplated by the present invention in which optical fibers are accommodated in helical grooves in a spacer that are periodically reversed in the direction of helix at given intervals.

The optical fiber cable according to the second aspect of the present invention has a plurality of optical fibers stranded to follow a helical path along the outer surface of a central member, with the direction of lay being periodically reversed at given intervals, and is characterized in that the lay reversing angle $\phi$ is adjusted to satisfy the following condition:

$240^\circ + 360^\circ \times n \leqq \phi \leqq 310^\circ + 360^\circ \times n$

where n is zero or a positive integer. The optical fiber cable incorporating this feature has the advantage of significantly reduced cabling costs as compared with the conventional optical cable fabricated by accommodating undirectionally stranded optical fibers in helical grooves in a spacer. In addition, this cable is free from the dependence of increased transmission loss on the cable bending direction, which has been a problem encountered with the conventional type of layer-stranded optical cable.

While the invention has been described in connection with what is presently considered to be the most practical and preferred embodiments, it is to be understood that the invention is not limited to the disclosed embodiments but, on the contrary, is intended to cover various modifications and equivalent arrangements included within the spirit and scope of the appended claims.

## Claims

1. An optical fibre cable having at least one optical fibre wound helically around an elongated central member in periodically reversing directions, **characterised in that** the lay reversing angle $\phi$, an angle through which an optical fibre is rotated in the circumferential direction of the central member over the distance from one reversal point of the direction of helix to the next reversal point, is in the neighbourhood of $275^\circ + 360^\circ \times n$, where n is zero or a positive integer.

2. An optical fibre cable according to claim 1 wherein said central member is a spacer having at least one helical groove in its outer surface, said helical groove accommodating said optical fibre and reversing its direction periodically as specified in claim 1.

## Patentansprüche

1. Ein optisches Faserkabel mit wenigstens einer optischen Faser, die spiralförmig um ein längliches Zentralteil in sich periodisch umkehrenden Richtungen gewunden ist,
**dadurch gekennzeichnet,** daß der Schlagrichtungsumkehrwinkel $\phi$, ein Winkel, um welchen eine optische Faser in der Umfangsrichtung des Zentralteils über die Entfernung von einem Umkehrpunkt der Richtung der Spirale zu dem nächsten Umkehrpunkt gedreht ist, in der Nähe von $275^\circ + 360^\circ \times n$ liegt, wobei n Null oder eine positive ganze Zahl ist.

2. Ein optisches Faserkabel nach Anspruch 1, wobei das Zentralteil ein Abstandsstück mit wenigstens einer spiralförmigen Rille in seiner äußeren Oberfläche ist, wobei die spiralförmige Rille die optische Faser aufnimmt und ihre Richtung periodisch, wie in Anspruch 1 angegeben, umkehrt.

## Revendications

1. Câble à fibre optique comportant au moins une fibre optique enroulée de manière hélicoïdale autour d'un élément central allongé suivant des directions qui s'inversent périodiquement, caractérisé en ce que l'angle d'inversion de d'application $\phi$ soit un angle dont une fibre optique est tournée suivant la direction circonférencielle de l'élément central sur la distance qui va d'un point d'inversion de la direction de l'hélice au point d'inversion suivant, se situe au voisinage de $275^\circ + 360^\circ \times n$, où n vaut zéro ou est un entier positif.

2. Câble à fibre optique selon la revendication 1, dans lequel ledit élément central est une pièce d'écartement comportant au moins une gorge hélicoïdale dans sa surface externe, ladite gorge hélicoïdale permettant le positionnement de ladite fibre optique et permettant l'inversion de sa direction de manière périodique, de la façon spécifiée dans la revendication 1.

FIG. 1(a)

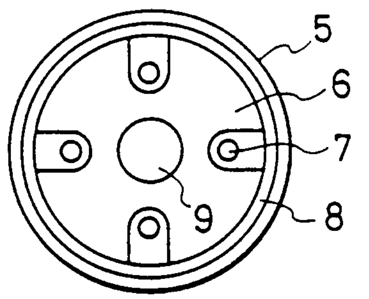


FIG. 1(b)

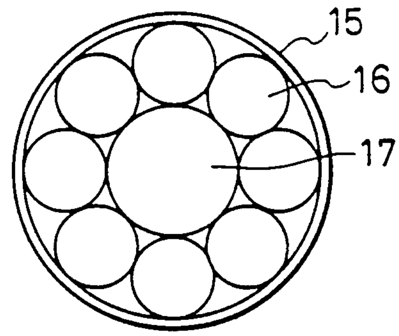


FIG. 2

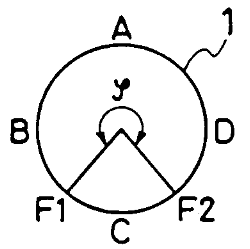


FIG. 3

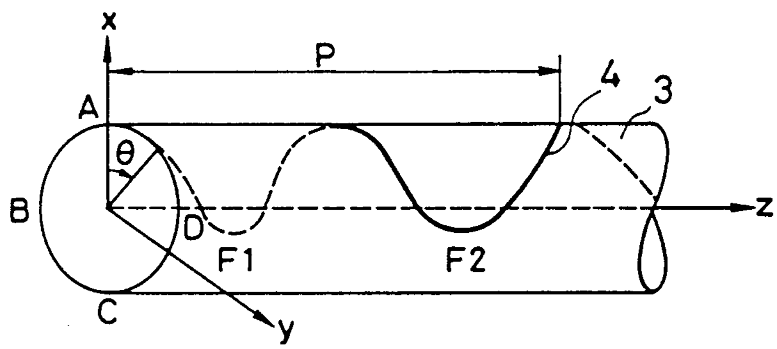


FIG. 4

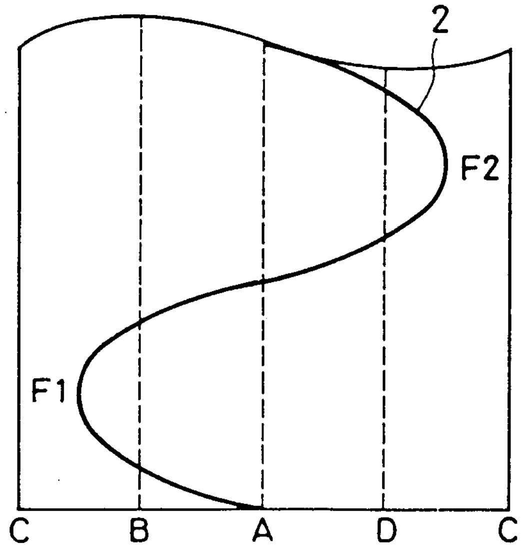

FIG. 5

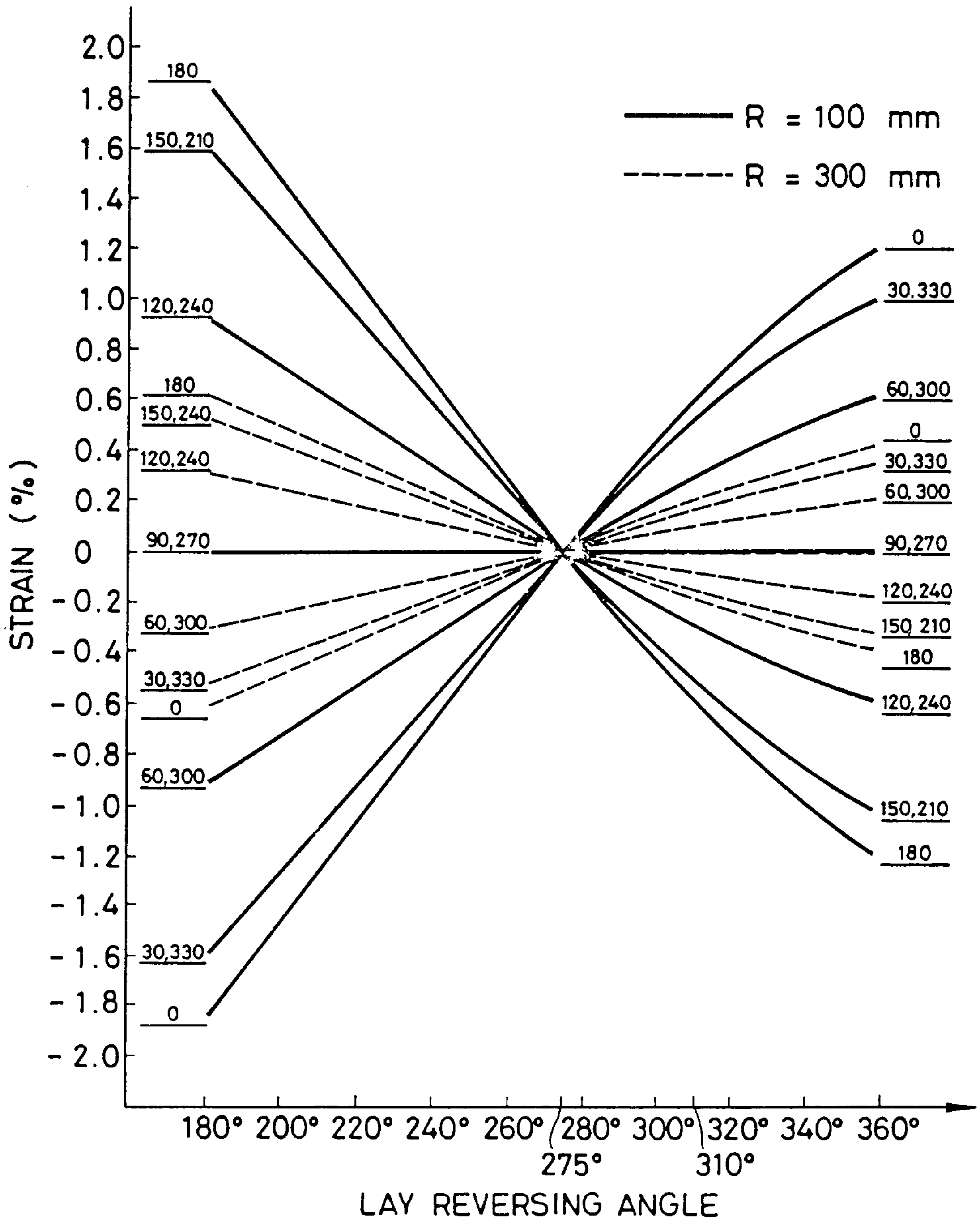
R = 100 mm
R = 300 mm
STRAIN (%)
2.0
1.8
1.6
1.4
1.2
1.0
0.8
0.6
0.4
0.2
0
-0.2
-0.4
-0.6
-0.8
-1.0
-1.2
-1.4
-1.6
-1.8
-2.0
180
150,210
120,240
180
150,240
120,240
90,270
60,300
30,330
0
60,300
30,330
0
0
30,330
60,300
0
30,330
60,300
90,270
120,240
150 210
180
120,240
150,210
180
180° 200° 220° 240° 260° 280° 300° 320° 340° 360°
275°
310°
LAY REVERSING ANGLE

FIG. 6

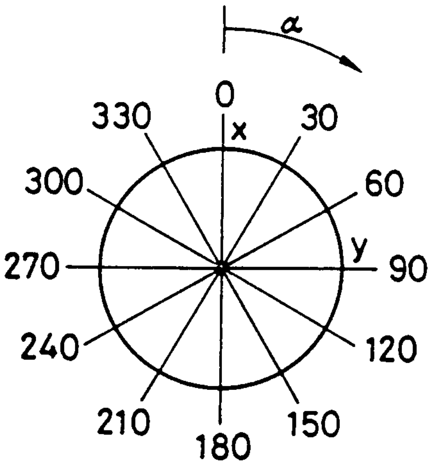


FIG. 8

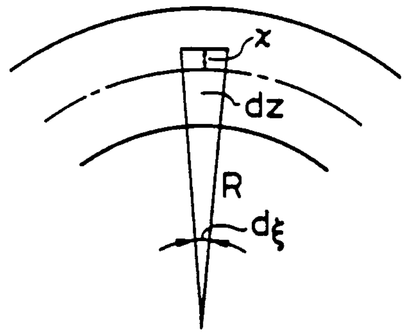


FIG. 7